Europäisches Patentamt

European Patent Office

Office européen des brevets

(11) Veröffentlichungsnummer: **0 346 637 B1**

# (12) EUROPÄISCHE PATENTSCHRIFT

(45) Veröffentlichungstag der Patentschrift: **06.04.94**

(51) Int. Cl.⁵: **H04N 7/137**, H04N 7/133

(21) Anmeldenummer: **89108917.9**

(22) Anmeldetag: **18.05.89**

(54) Verfahren zur Aufbereitung und Übertragung einer Bildsequenz.

(30) Priorität: **13.06.88 DE 3820038**

(43) Veröffentlichungstag der Anmeldung:
**20.12.89 Patentblatt 89/51**

(45) Bekanntmachung des Hinweises auf die
Patenterteilung:
**06.04.94 Patentblatt 94/14**

(84) Benannte Vertragsstaaten:
**DE FR GB IT NL**

(56) Entgegenhaltungen:
**US-A- 4 727 422**
**US-A- 4 733 298**

**PROCEEDINGS OF ICASSP 86, Tokyo, 7.-10.
April 1986, Band 2, Seiten 989-992,IEEE, New
York, US; R. FURNER et al.: "Motion compensated vector quantization"**

**IEEE TRANSACTIONS ON CONSUMER ELEC-
TRONICS, Band 34, Nr. 1, Februar 1988, Sei-
ten16-34, IEEE, New York, US; H. GAGGIONI
et al.: "Digital video transmission andcoding
for the broadband ISDN"**

(73) Patentinhaber: **ANT Nachrichtentechnik GmbH
Gerberstrasse 33
D-71522 Backnang(DE)**

(72) Erfinder: **Grotz, Karlheinz, Dipl.-Ing.
Wilhelmstrasse 25
D-7012 Fellbach(DE)**
Erfinder: **Mayer, Jörg, Dipl.-Ing.
Obere Waiblinger Strasse 120
D-7000 Stuttgart 50(DE)**
Erfinder: **Süssmeier, Georg, Dipl.-Ing.
Hohenheimer Strasse 19
D-7150 Backnang(DE)**

PROCEEDING OF 1984 INTERNATIONAL ZU-
RICH SEMINAR ON DIGITAL COMMUNICA-
TIONS,Zurich, 6.-8. März 1984, Seiten 49-56,
IEEE, New York, US; J. DEWITTE et
al.:"Optimization of addressing bit rate in a
multimode coder with motioncompensation
for broadcast television"

SPIE, Band 594: Image Coding, 1985, Seiten
119-128, SPIE, Washington, US;
G.KUMMERFELDT et al.: "Coding television
signals at 320 and 64kbit/s"

PROCEEDINGS IEEE INTERNATIONAL CON-
FERENCE ON COMMUNICATIONS '87, Seattle,Washington, 7.-10. Juni 1987, Band 1, Seiten 125-129, IEEE, New York, US; Y.YASHIMA
et al.: "A highly efficient coding method for
HDTV signals"

T.S. HUANG et al.: "Image Sequence Analysis", 1981, Seiten 298-309, Springer-Verlag,
Berlin, DE; T. HUANG et al.: "Chapter 4 -
Image Sequence enhancement"

EP 0 346 637 B1

**Beschreibung**

Die Erfindung betrifft ein Verfahren zur senderseitigen Aufbereitung einer Bildsequenz für die Übertragung über einen Kanal mit begrenzter Datenkapazität und deren empfangsseitige Rekonstruktion.

Für Bildinformationen, die über einen Übertragungskanal mit begrenzter Datenkapazität übertragen werden sollen, gibt es zahlreiche Verfahren zur Redundanz- und Irrelevanzverminderung. In Esprit '86 Results and Achievements, Commission of the European Communities, Directorate General XIII, 1987, North-Holland, Seiten 413 bis 422, werden einige solcher Verfahren vorgeschlagen. Beim DPCM (Differential Pulse Code Modulation)-Verfahren wird anstelle aktueller Abtastwerte die Differenz zwischen dem aktuellen Wert und einem Prädiktionswert übertragen. Die Datenkompression wird durch Quantisierung erreicht. Bei der adaptiven DPCM wird anhand eines Bewegungskriteriums die Prädiktion und der Quantisierungsgrad gesteuert. Beim ABTC (Adaptive Block Truncation Coding)-Verfahren wird die Codierung je nach Bewegungsanteil von Bildbereichen in 3 Moden gesteuert. Das HPC (Hierarchical Predictive Coding)-Verfahren basiert auf der Kombination von Prädiktionscodierung und Interpolation. Bei der Transformationscodierung, z.B. der ADCT (Adaptive Cosine Transform)-Codierung werden die örtlichen Abtastwerte eines Bildblocks mittels einer mathematischen Vereinbarung transformiert zur Gewinnung von entkorrelierten Koeffizienten. Die Datenkompression wird durch Abschneiden vom Koeffizienten und nichtlinearer Quantisierung erreicht. Bei der Vektorquantisierung wird das Bild in eine große Zahl kleiner Zellen unterteilt, z.B. 2x2 oder 4x4 Bildelemente. Jede Zelle von K Bildelementen wird dann als Vektor im K dimensionalen Raum aufgefaßt. Eine Anzahl von repräsentativen Vektoren wird für die Übertragung ausgewählt. Für die Codierung werden die aktuellen Bildvektoren durch die repräsentativen Vektoren in ihrer Nachbarschaft beschrieben.

Aus der DE-C-37 04 777 ist es bekannt, die Bewegungsvektoren für Teilbildbereiche zu ermitteln und diese zu codieren. Bei stark bewegten Bereichen werden bildpunktabhängige Informationen für diese Teilbildbereiche übertragen.

Aus SPIE (International Society for Optical Engineering), Band 594 : Image Coding, Seiten 119 bis 128, ist es bekannt, für ein ganzes sich bewegendes Objekt Verschiebungsvektoren zu ermitteln und zu übertragen. Prädiktionsfehler werden blockweise codiert, beispielsweise mittels einer DCT (discrete cosine transform)-Transformation und übertragen. Ausgelassene Zwischenbilder werden empfangsseitig bewegungsadaptiv interpoliert.

Aus "Motion Compensated Vector Quantization", Proceedings of the ICASSP, Seiten 989 bis 992, Tokyo, 07. bis 11. April 1986 ist ein Verfahren zur senderseitigen Aufbereitung einer Bildsequenz nach einer Bildaufbauphase für die Übertragung über einen Kanal mit begrenzter Datenkapazität und deren empfangsseitige Rekonstruktion bekannt. Es erfolgt dort ein teilbildbereichsweises Ermitteln und Übertragen von Verschiebungsvektoren. Zur Entscheidung, welche Verschiebungsvektoren zu übertragen sind, werden Bildpunktdifferenzen zwischen dem aktuellen Bild und einem zeitlich davorliegenden Bild ermittelt. Wenn die Summe der Bildpunktdifferenzen einen Schwellwert überschreitet, wird die vektorquantisierte Version dieses Teilbildbereiches übertragen, ansonsten nur die Komponenten des Verschiebungsvektors.

Aus "Digital Video Transmission and Coding for the Broadband ISDN", IEEE Transactions on Consumer Electronics, Seiten 16 bis 35, Vol. 34, New York, Februar 1988 ist es bekannt, Verschiebungsvektoren für wenig bewegte Teilbildbereiche zu ermitteln und stark bewegte Teilbildbereiche durch quantisierte Koeffizienten zu beschreiben. Die durch Unterabtastung ausgelassenen Bildpunkte werden interpoliert bzw. extrapoliert. Es werden dort aber keine komplett ausgelassenen Bilder rekonstruiert.

Aufgabe der Erfindung ist es, ausgehend vom Oberbegriff des Patentanspruchs 1, ein anderes Verfahren anzugeben, welches insbesondere eine gute empfangsseitige Bildrekonstruktion ermöglicht. Diese Aufgabe wird durch die Merkmale des Patentanspruchs 1 gelöst. Die Unteransprüche zeigen vorteilhafte Weiterbildungen dieses Verfahrens auf.

Die Erfindung weist folgende Vorteile auf:
Es wird eine hohe Bildqualität erreicht, was insbesondere durch die Ermittlung eines bewegungskompensierten Schätzbildes und der aktivitätsgesteuerten Codierung von Teilbildbereichen ermöglicht wird.

Durch eine bewegungskompensierte empfängerseitige Bildextra-(-inter)-polation wird eine ruckartige Bilddarstellung vermieden. Der Übertragungskanal wird optimal ausgenutzt. Im Gegensatz zur Realisierung gemäß SPIE, Band 594, Seiten 119 bis 128, wo ein ganzes Objekt durch einen Verschiebungsvektor beschrieben wird und demnach in den Randbereichen dieses Objekts ein großer Unsicherheitsbereich entsteht, der nur durch Übertragung von Prädiktionsfehlern im gesamten Unsicherheitsbereich klein gehalten werden kann, muß beim Verfahren nach der Erfindung nur bei ganz wenigen Teilbildbereichen/Blöcken Originalbildinhalt bzw. Prädiktionsfehler übertragen werden. Durch die Auswahl der zu übertragenden transformierten Teilbildbereiche/Blöcke anhand der Differenzen (Fehler) zu vorhergehenden Teilbildberei-

3

chen /Blöcken läßt sich bereits mit wenig Übertragungsdaten ein bezüglich eines Bewegungsablaufes sicheres Bild rekonstruieren. Das Verfahren nach der Erfindung bzw. ein danach ausgeführter Codec erlaubt folgende Betriebsarten:

- Übertragung der Kopf-Schulterdarstellung einer Person mit einer zeitlichen Auflösung von 25 (30) Bildern pro Sekunde,
- Übertragung von Standbildern mit hoher Ortsauflösung und daraus abgeleitet:
- Standbild mit eingefrorenem Bewegtbild,
- Standbild mit eingeblendetem Bewegtbild.

Anhand der Zeichnungen wird ein Ausführungsbeispiel der Erfindung nun näher erläutert. Es zeigen:

Fig. 1       ein Blockschaltbild für ein Bildtelefon über ISDN, bei welchem das Verfahren nach der Erfindung eingesetzt wird,

Fig. 2       das Prinzip der bewegungskompensierten Prädiktion,

Fig. 3       das Prinzip der blockorientierten Bildextrapolation,

Fig. 4       ein Video-Coder mit Codierung der Quellbildsequenz,

Fig. 5       ein Video-Coder mit Codierung des Prädiktionsfehlers,

Fig. 6       eine Bitmaske zur Adressierung der Verschiebungsvektoren,

Fig. 7       eine Kennlinie zur Dämpfung kleiner Differenzen,

Fig. 8       eine Sortiertabelle für die DFD,

Fig. 9       ein Video-Decoder,

Fig. 10      einen Datenrahmen für die Übertragung,

Fig. 11      die Vektor- und DCT-Maske bei einer Bildvorlage mit Bewegungsanteil,

Fig. 12      eine Übersicht über die DCT-Codierung,

Fig. 13      die DCT-Klassifikation.

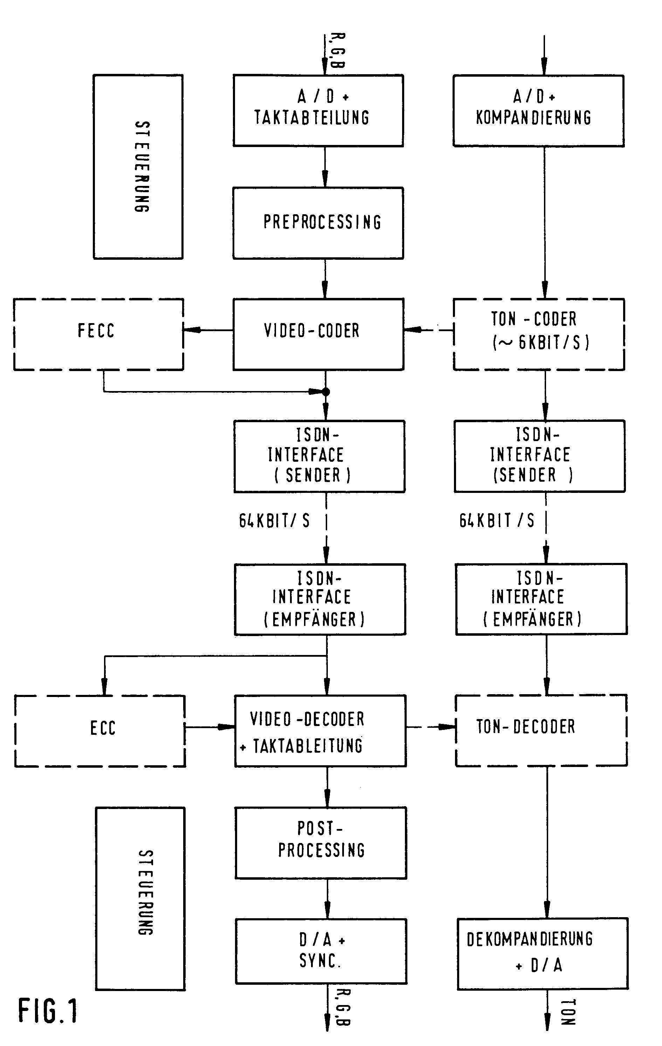

Das Bildtelefon nach Fig. 1 besteht aus getrennten Codern und Decodern für die Bild- und Tonübertragung. Damit ist z.B. eine Übertragung über 2 B-Kanäle in einem ISDN-Netz möglich. Eine Übertragung von Bild und Ton über einen B-Kanal ist nach geeigneter Quellcodierung des Tones ebenfalls möglich, ohne daß sich am Prinzip der Bildcodierung etwas ändert. Die Eingangsbildsequenz R,G,B wird z.B. nach der digitalen Fernsehnorm CCIR 601 abgetastet (A/D-Wandlung und Taktableitung). Die Toninformation wird ebenfalls A/D gewandelt und einer Kompandierung unterworfen. Die Digitalabtastung erfolgt gemäß CCIR 601 folgendermaßen:

| Luminanz (Y) -Abtastfrequenz: | 13,5 MHz 8 Bit linear |
|---|---|
| Chrominanz (U/V) - Abtastfrequenz: | 6,75 MHz 8 Bit linear |
| Bits/Pixel (Farbe): | 16 |
| Aktiver Bildinhalt: | 720*576 Pixel |
| Bildwechsel: | 50 (60) Halbbilder/s |
| $864 * 625 * 25 * 16 \rightarrow 216$ MBit/s | |

Die hohe Qualität dieser Abtastung erlaubt die Speicherung hochauflösender Standbilder, wie sie für die vorgenannte zweite Betriebsart vorgesehen ist.

Zur Anpassung dieser Quellbildsequenz an den nachfolgenden Video-Coder wird diese folgendermaßen vorbehandelt (Preprocessing):

Halbieren der Auflösung des Bildes in horizontaler und vertikaler Richtung.

Reduktion der Chrominanzauflösung in vertikaler Richtung auf 1/2.

Nutzung der Austastlücke zur Übertragung.

Somit $352 * 288$ aktive Bildpunkte; 25 Hz Bildwechsel.

| Y Abtastfrequenz: | 6,75 MHz 8 Bit linear |
|---|---|
| U/V Abtastfrequenz: | 3,375 MHz 8 Bit linear |
| Bits/Pixel: | 12 |
| Bildwechsel: | 25 (30) Hz ohne Zeilensprung |
| Datenrate: | 30,41 (36,49) MBit/s |
| Reduktion: | Faktor 7 |

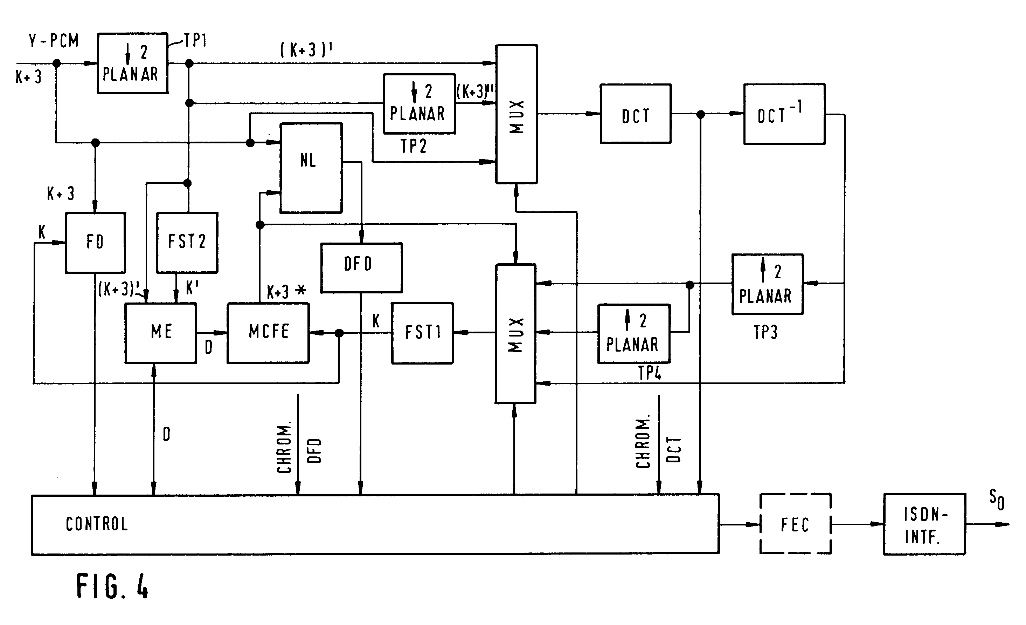

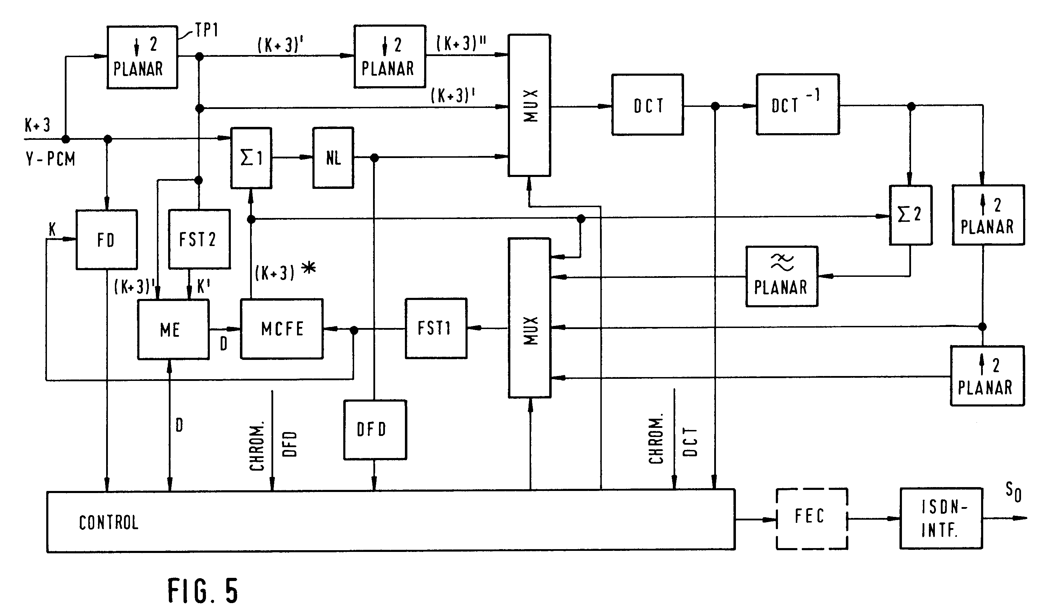

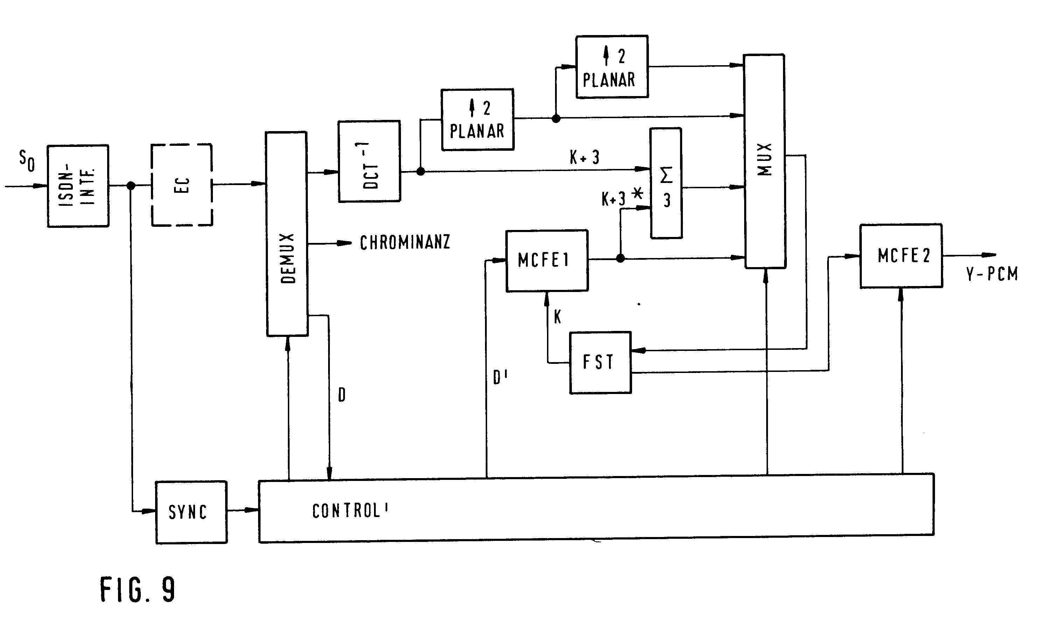

Diese Maßnahme reduziert die Quelldatenrate von 216 Mbit/s auf 30.41 (36.49) MBit/s. Die weitere Reduzierung geschieht im Video-Coder, der in Fig. 4 bzw. Fig. 5 dargestellt ist. Mit sender- und empfängerseitigen ISDN-Interface Schaltungen wird die Übertragung auf 64 kBit/s ISDN-Kanälen ermöglicht. Empfängerseitig erfolgt eine zur senderseitigen Aufbereitung entsprechende Decodierung. Die Figur 9 zeigt den entsprechenden Video-Decoder. Eine Signalnachverarbeitung (Post-Processing) stellt wieder ein gemäß CCIR 601 normgerechtes Bildformat her, welches nach D/A-Wandlung und Hinzufügung von Synchroninformation zur Wiedergabe auf einem RGB-Monitor geeignet ist. Die Schaltungsblöcke FECC (Forward Error Correction Control) und ECC (Error Correction Control) sind Einheiten zur bedarfsweisen Fehlerkorrektur. Übertragungsfehler können damit erkannt und soweit möglich korrigiert werden.

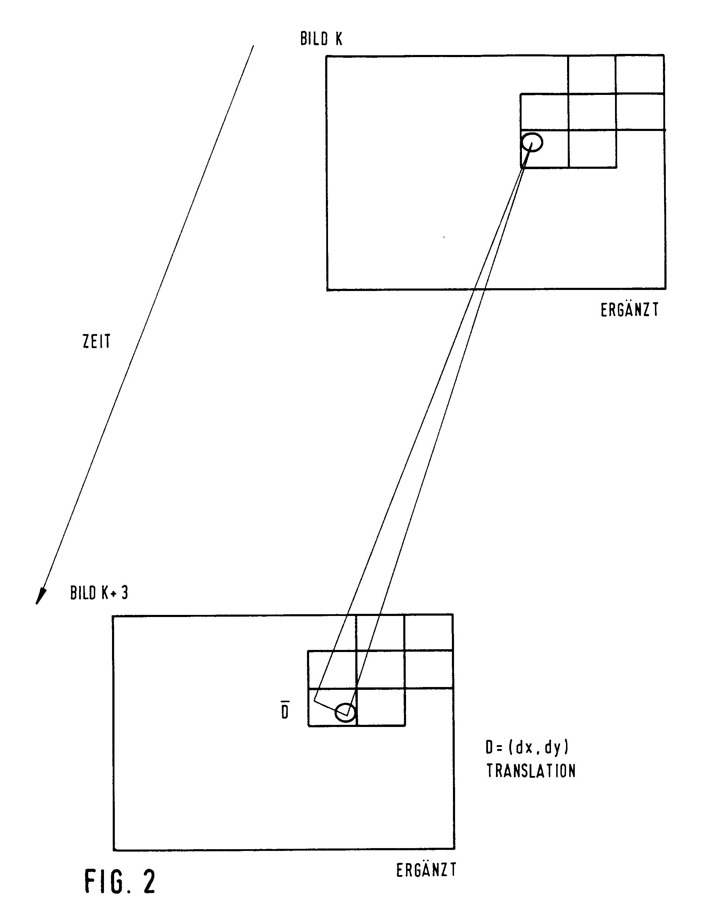

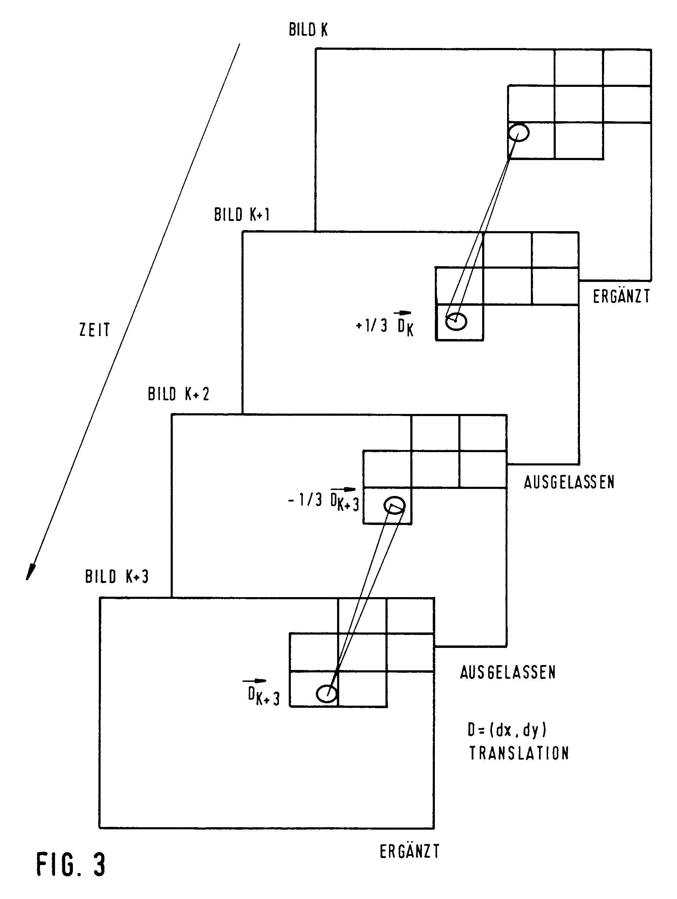

Die Grundidee des Codecs wird nun anhand der Figuren 2 und 3 erläutert. Sie besteht darin, nach dem Bildaufbau nur jedes 3. Bild (Fig. 2) zu codieren. Hierzu wird von dem Bild K + 3 im Coder ein bewegungskompensiertes Schätzbild K + 3* aus Bild K gebildet. Die Vektoren, mit denen K + 3* gebildet wird, werden übertragen, so daß der Decoder das gleiche Schätzbild erzeugen kann. Es werden dann die Pixel zu Pixel Differenzen DFD zwischen dem Schätzbild K + 3* und dem neuen Bild K + 3 blockweise addiert (DFD = Displaced Frame Difference). Die DFD innerhalb eines BlockS/Teilbildbereichs von 8*8 Pixel ergibt sich zu

$$DFD = \Sigma\Sigma |p_{K+3*}(x,y) - p_{K+3}(x,y)|$$

mit Blockkoordinaten: x = 1,8 y = 1,8
und Pixelintensität p.

Für die Teilbildbereiche/Blöcke mit großen Summen, die Stellen mit großen Abweichungen kennzeichnen, wird entweder der Originalbildinhalt (Fig. 4) oder das Differenzbild (Fig. 5) mit einer wahrnehmungsadaptiven DCT (Discrete Cosine Transform) codiert. Im Empfänger wird die inverse DCT gebildet und in das bewegungskompensierte Schätzbild eingesetzt. Die fehlenden Zwischenbilder werden mit den übertragenen Verschiebungsvektoren D bewegungskompensiert extrapoliert oder interpoliert, so daß wieder ein weicher Bewegungsablauf entsteht (Fig. 3). Wie aus Fig. 3 ersichtlich ist, wird das Bild K + 1 aus dem Bild K extrapoliert (Verschiebungsvektor + 1/3 $D_K$) und das Bild K + 2 aus dem Bild K + 3 (Verschiebungsvektor - 1/3 $D_{K+3}$).

Um einen schnellen Bildaufbau am Anfang der Verbindung zu gewährleisten, wird zuerst ein um den Faktor 4 planar tiefpassgefiltertes erstes Bild übertragen. Danach wird der Bildinhalt ergänzt, der um den Faktor 2 planar tiefpassgefiltert ist. Schließlich wird ungefilterter Bildinhalt ergänzt. Das Maß zur Steuerung dieser drei Betriebsarten wird aus der mittleren DFD - MDFD - gewonnen. Das Verfahren garantiert, daß der Bildinhalt auch bei großen Änderungen konsistent bleibt. D.h. ein willkürliches "Einfrieren" von Bildinhalten bei großen Änderungen wird vermieden. Zur Ermittlung dieser mittleren DFD werden die Bildpunkt-zu-Bildpunkt-Differenzen aller Blöcke zu je 8*8 Pixel herangezogen. Es ergibt sich demnach:

$$MDFD = \Sigma\Sigma DFD(i,j)$$

i = 1,44
j = 1,36

Die Funktion des Video-Coders wird am Beispiel der Luminanzbildverarbeitung (Fig. 4 und Fig. 5) beschrieben, da in der Chrominanzbildverarbeitung Ergebnisse aus dem Luminanzzweig übernommen werden. Beim Video-Coder nach Fig. 4 wird die Quellbildsequenz DCT transformiert, wohingegen beim Video-Coder nach Fig. 5 ein Differenzbild DCT transformiert wird. Da der Aufbau dieser beiden Video-Coder-Versionen sehr ähnlich ist, wird nur eine Ausführungsform ausführlich erläutert und für die andere nur die davon abweichende Realisierung beschrieben.

Jedes dem Eingang des Video-Coders als Y-PCM Signal zugeführte neue Bild K + 3 wird mehrfach weiterverarbeitet:

a) Das Bild K + 3 wird in der Stufe TP1 um den Faktor 2 planar tiefpassgefiltert und die Abtastfrequenz halbiert. Am Ausgang erscheint ein Bild (K + 3)′. Dieser, in der Ortsauflösung reduzierte Bildinhalt, wird verwendet, wenn die mittlere DFD einen Grenzwert TH2 überschreitet (Spatiales Subsampling bei großen Änderungen). Die Verkleinerung wird im Decoder und für die Prädiktion durch Interpolation wieder aufgehoben (Stufe TP3).

b) Das Bild K + 3′ wird in der Stufe TP2 noch einmal um den Faktor 2 planar tiefpassgefiltert und die Abtastfrequenz halbiert. Am Ausgang der Stufe TP2 erscheint das Bild (K + 3)′′. Dieses Bild wird im Falle des Verbindungsaufbaus oder eines Schnitts verwendet und vollständig mit Hilfe der DCT übertragen. Als Kriterium hierfür wird ebenfalls die mittlere DFD (wie in a), jedoch mit einer Schwelle TH4 > TH2 herangezogen. Damit erhält man einen schnellen Bildaufbau. Die Verkleinerung wird im Decoder und für die Prädiktion durch Interpolation wieder aufgehoben (Stufen TP3 und TP4).

c) Mit Hilfe des in einem Bildspeicher FST2 gespeicherten Bildes K′ und dem Bild K + 3′ wird im Bewegungsvektorschätzer ME ein Satz von Verschiebungsvektoren D ermittelt. Ein Vektor gilt für einen Bereich von 16*16 Pixel.

d) Das Bild K + 3 wird mit dem im Bildspeicher FST1 gespeicherten Bild K verglichen. Das Bild K wird durch eine inverse DCT-Transformation $DCT^{-1}$ und gegebenenfalls Aufhebung der Tiefpassfilterung (Stufen TP3, TP4) erstellt. Mit Hilfe der Frame-Differenz-Stufe FD werden dabei blockweise geänderte Bildbereiche von ungeänderten unterschieden. Die Bildung der Frame-Differenz geschieht nach der Beziehung:

$$FD = \Sigma\Sigma|p_K(x,y) - p_{K+3}(x,y)|$$

$x = 1,8$
$y = 1,8$

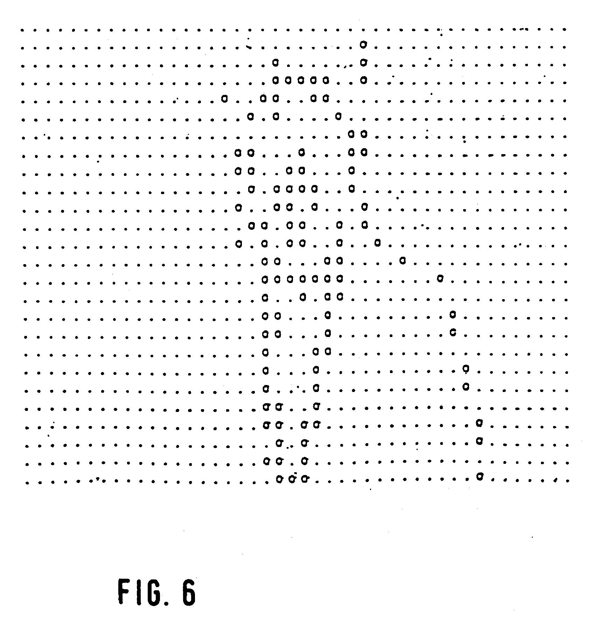

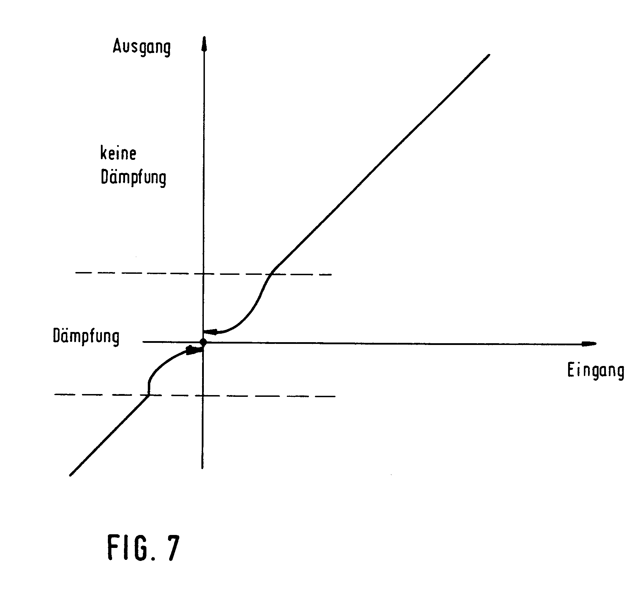

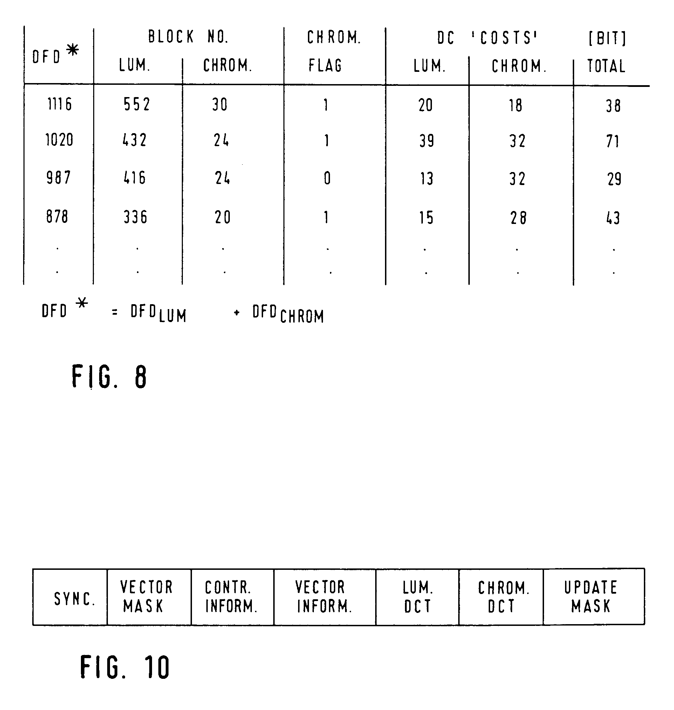

Für die geänderten Bildbereiche werden Verschiebungsvektoren D zur Bewegungskompensation zum Decoder übertragen. Im Coder und Decoder wird damit im Extrapolator zur Bewegungskompensation MCFE (Motion Compensated Frame Interpolator) ein bewegungskompensiertes Schätzbild K + 3* aus Bild K gebildet. Die Adressierung der Verschiebungsvektoren geschieht mit einer Bitmaske (Fig. 6), die VWL (Variable word length) codiert wird. Die Verschiebungsvektoren werden als Differenzen zum jeweils vorhergehenden Wert statistisch codiert, wobei pro Bild nur der erste Verschiebungsvektor als Absolutwert übertragen wird. Im Noise Limiter NL wird die Differenz zwischen dem neuen Bild K + 3 und dem Schätzbild K + 3* bildpunktweise gebildet. Diese wird einer nichtlinearen Kennlinie (Fig. 7) unterworfen, die kleine Differenzen dämpft und große ungeändert läßt. Wesentlich dafür, daß kleine Differenzen nicht im Bild stehenbleiben, sondern abgebaut werden können, ist, daß die kleinen Differenzen nur gedämpft, aber nicht zu Null gesetzt werden (Fig. 7). Auf diese Weise wird zum einen das Grundrauschen des neuen Quellbildes gedämpft und zum anderen kleine rauschartige Störungen durch Fehler in der bewegungskompensierten Prädiktion und der DCT-Codierung vermindert. Dies führt zu einer Senkung des Bitbedarfs bei der DCT-Codierung. Die DFD wird blockweise für 8*8 Pixel gebildet (Stufe DFD) und mit fallender Größe gemäß einer Tabelle (Fig. 8) sortiert. Zusätzlich wird in diese Tabelle die jeweils für die DCT-Codierung des Blocks (Block No.) erforderliche Anzahl der Bits eingetragen. Außerdem ist die Chrominanz-Signalisierung (Chrom. Flag) und die DCT-Bitzahl DCT'COSTS' eingetragen.

Alle diese Informationen werden durch die Steuerung CONTROL zu einem Übertragungssignal aufbereitet. Diese Informationen werden aus der DCT-Codierung des DFD-Bildes (Prädiktionsfehler Fig. 5) oder des Quellbildes (Fig. 4) gewonnen. Die freie Kanalbitrate wird zur Übertragung von DCT-Blöcken genutzt. Dabei werden die Blöcke mit der größten DFD übertragen, bis der Kanal ausgefüllt ist. Die Bitmaske zur Adressierung der DCT-Blöcke wird VWL codiert (Fig. 6).

Für die Prädiktion wird im Coder die inverse DCT-Transformation $DCT^{-1}$ gebildet. Ferner befinden sich hier Interpolationsfilter, die verkleinerten Bildinhalt wieder vergrößern (TP3 und TP4). Im Bildspeicher FST1 wird das rekonstruierte Bild K gespeichert. Den Daten können als Übertragungsfehlerschutz zusätzlich Informationen eines FEC-Codes (FEC = Forward error correction) beigefügt werden. Die Steuerung (Control) überwacht alle Funktionen des Codecs und schaltet es gemäß den Randbedingungen in die entsprechende Betriebsart. Die ISDN-Schnittstelle verbindet das Codec mit dem Netz. Die Auswahl der zu übertragenden Bildinformation wird durch Multiplexer MUX gesteuert, die wiederum von der Steuerung (Control) ihre Umschaltbefehle erhalten.

In Abweichung zur Realisierung gemäß Fig. 4 wird in Fig. 5 nicht das Bild K + 3 über den Multiplexer MUX zur DCT-Transformationsstufe geführt, sondern die Differenz zwischen dem Bild K + 3 und dem Schätzbild K + 3* (Stufe Σ 1). Hierdurch werden nur die Prädiktionsfehler DCT transformiert. Der 'Noise Limier' NL ist hier vor den Eingang des Multiplexers MUX geschaltet. Um für die Prädiktion wieder ein Quellbild zur Verfügung zu haben, muß die Differenzbildung nach der DCT-Rücktransformation $DCT^{-1}$ wieder rückgängig gemacht werden (Stufe Σ 2).

Im Video-Decoder (Fig. 9) - nur der Luminanzteil ist dargestellt - werden nach der ISDN-Schnittstelle die Steuerinformationen aus dem Datenstrom gewonnen (SYNC, CONTROL'). Die optionale Fehlerkorrektur EC erkennt Übertragungsfehler und korrigiert sie soweit möglich. der Demultiplexer DEMUX trennt Verschiebungsvektoren, DCT-Koeffizienten und den Chrominanzanteil. Die Verschiebungsvektoren werden gespeichert, die Bitmasken werden decodiert. Mit Hilfe der decodierten Vektoren D′ und dem im Bildspeicher FST gespeicherten Bild K wird mit Hilfe des Extrapolators zur Bewegungskompensation MCFE1 ein bewegungskompensiertes Schätzbild K + 3* des aktuellen Bildes gebildet. Die übertragenen Bildblöcke aus dem Bild K + 3 werden einer inversen DCT-Transformation $DCT^{-1}$ unterworfen und in das Schätzbild K + 3* mittels der Summierstufe Σ 3 eingesetzt. Ein weiterer Extrapolator zur Bewegungskompensation MCFE2

6

extrapoliert die ausgelassenen Bilder K + 1 und K + 2 gemäß Fig. 3 bewegungskompensiert.

Nach Fig. 3 wird das Bild K + 1 aus Bild K durch Umrechnen der Vektoren, die zu Bild K geführt haben, extrapoliert. Bild K + 2 wird aus Bild K + 3 durch Umrechnen der Vektoren, die zu Bild K + 3 geführt haben, extrapoliert. Auf diese Weise wird die Originalbildfrequenz von 25 (30) Bildern/s wiederhergestellt. Das Bildsignal kann mit einem rekursiven zeitlichen Filter von kleinen Bewegungsdefekten befreit werden (nicht dargestellt).

Der Wert eines Pixels p(x,y) berechnet sich dabei nach der Formel:

$$p(x,y) = p\text{-}1(x,y) + 1/2 (p(x,y) - p\text{-}1(x,y)).$$

Schnelle Änderungen werden so auf mehrere Bilder verzögert; es entsteht ein Überblendeffekt, der sich z.B. bei Augen und Mundbewegungen, die nicht durch Vektoren beschreibbar sind, vorteilhaft auswirkt.

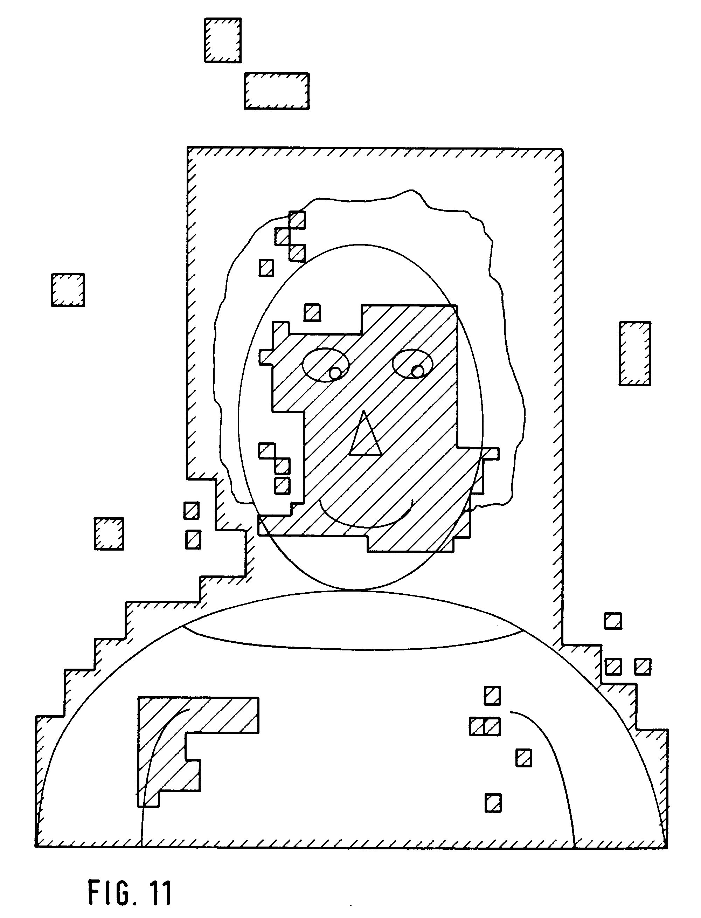

Figur 10 zeigt einen Datenrahmen für die Übertragung. Die Daten werden seriell in sieben verschiedenen Zeitschlitzen übertragen: Synchronwort (Sync.), Vektor Maske (Vector Mask.), Steuerinformation (Contr. Inform.), Vektorinformation (Vector. Inform.), Luminanz- und Chrominanz-DCT (Lum. DCT, Chrom. DCT) und Aktualisierungsinformation (Update Mask).

In Figur 11 ist die Vektormaske (Außenkonturen schraffiert) und die DCT-Maske (flächig schraffiert) für eine bewegte Bildvorlage dargestellt. Wie aus Figur 11 ersichtlich, müssen nur stark bewegte Bereiche im Gesichts- und Schulterbereich mittels DCT übertragen werden.

Für den Bewegungsschätzer ME kann ein Gradientenverfahren insbesondere gemäß EP 236 519 A1 verwendet werden, welches mit drei Iterationsschritten auskommt. Als Startwert der Schätzung wird vom ortsgleichen Block aus dem vorhergehenden Vektorfeld ausgegangen. Nichtganzzahlige Vektoren können bilinear interpoliert werden. Ein vollständiges Bild kann durch 396 Vektoren beschrieben werden.

Als Extrapolationsfilter MCFE können die ebenfalls aus EP 236 519 A1 bekannten FIR (finite impulse response)-Filterstrukturen benutzt werden. Eine planare Interpolation nichtganzzahliger Vektoren ist mit solchen Filtern folgendermaßen möglich:
Luminanz: 2fach-Überabtastung mit sieben Koeffizienten
Chrominanz: 4fach-Überabtastung mit elf Koeffizienten.

Für die DCT-Transformation wird wie bereits geschildert eine feste Blockgröße von 8∗8 Bildpunkten verwendet. Je nach Betriebszustand verarbeitet die DCT Bildblöcke von 8∗8 Bildpunkten
   * in voller Auflösung (normaler Mode) nach Tabelle 1 (Figur 8) oder
   * mit halber Auflösung in beiden Richtungen bei drohendem Bufferüberlauf (entspricht einem Bildausschnitt von 16∗16 Punkten).
   * mit einem viertel der Auflösung bei Bildaufbau und Szenenschnitt (entspricht einem Bildausschnitt von 32∗32Punkten).

Für alle Betriebsarten wird der gleiche DCT-Algorithmus verwendet. Der DCT-Coder erreicht eine mittlere Datenrate von < 1 bit/Bildpunkt.

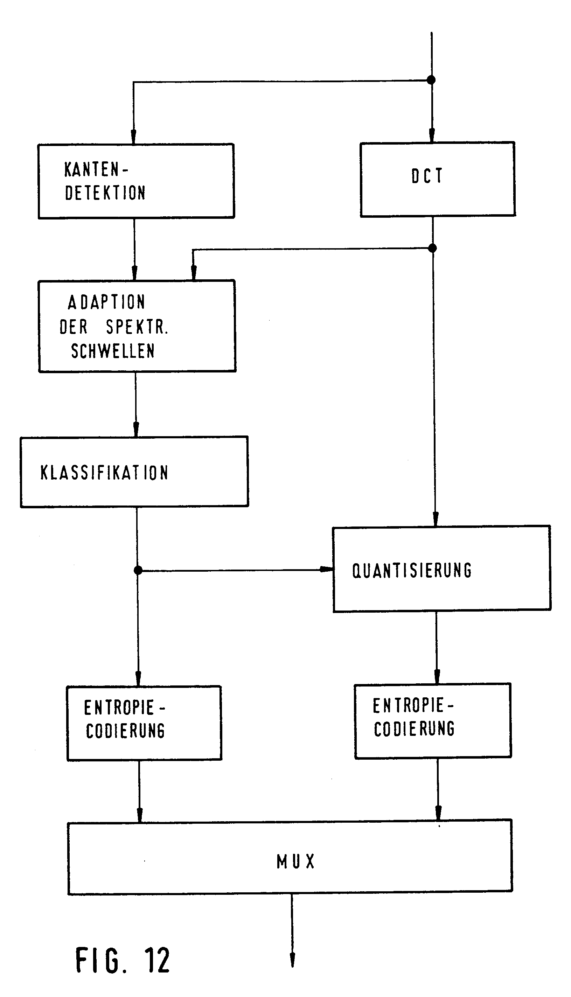

Eine zweidimensionale DCT-Transformation von 8∗8 Bildpunkten wird durch zwei aufeinanderfolgende eindimensionale DCT-Transformationen von jeweils acht Bildpunkten erreicht. Für Hin- und Rücktransformation wird der gleiche Algorithmus verwendet. Eine Übersicht über die gesamte DCT-Codierung gibt Figur 12, die ausführlich in der DE 37 09 094.1 beschrieben ist. Hier nur eine Kurzerläuterung der Funktionsblökke gemäß Figur 12:

Kantendetektion und Adaption der spektralen Schwellen

Durch die Kantendetektion wird eine lokale Adaption der spektralen Sichtbarkeitsschwellen erreicht. Werden in einem Block diagonale Kanten detektiert, so werden auch Koeffizienten berücksichtigt, die ihre Sichtbarkeitsschwelle nur zur Hälfte erreichen.

Klassifikation

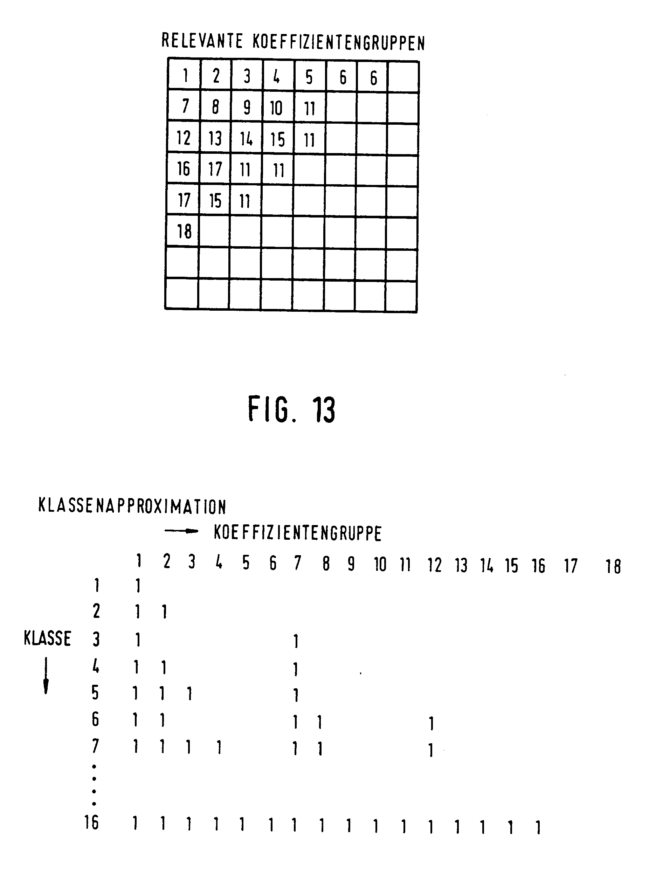

Die Koeffizienten, die die Sichtbarkeitsschwelle überschreiten, werden nach Klassen eingeteilt und übertragen (Figur 13). Die Klasse gibt an, welche Koeffizienten in welcher Reihenfolge übertragen werden (Koeffizientenadressierung). Die Klasseninformation wird als Zusatzinformation entropiecodiert übertragen.

Luminanz-Block

* Unterdrückung singulärer Koeffizienten.
* Relevante Koeffizientengruppen auswählen. Eine Koeffizientengruppe wird nur dann berücksichtigt, wenn mindestens die Hälfte ihrer Koeffizienten die Sichtbarkeitsschwelle überschreitet. Alle Koeffizienten einer relevanten Koeffizientengruppe werden übertragen (z.B. 18 Koeffizientengruppen).
* Alle relevanten Koeffizientengruppen werden zu einer Klasse zusammengefaßt, z.B. 16 Klassen (Figur 13).

Chrominanz-Block

Da hier nur wenige Koeffizienten übertragen werden müssen, können die Koeffizienten direkt zu Klassen zusammengefaßt werden (z.B. 8 Klassen bei max. 7 Koeffizienten).

Quantisierung

Nur die durch die Klassifikation eines Blocks ausgewählten Koeffizienten werden quantisiert. Jeder Koeffizient wird entsprechend seiner Sichtbarkeitsschwelle quantisiert. Die Wahrnehmbarkeitsschwellen für die einzelnen Koeffizienten wurden durch visuelle Tests ermittelt.

Entropiecodierung

Die gesamte Daten- und Steuerinformation ist entropiecodiert:
* Die selektierten und quantisierten AC(Wechselanteil)-Koeffizienten.
* Der Prädiktionsfehler für die DC(Gleichanteil)-Koeffizienten.
* Die Klasseninformation.
Die besonders häufigen Werte der AC- und DC-Koeffizienten sind optimal codiert, die selten vorkommenden Werte werden mit einem Präfix Postfix-Binär-Code codiert.
Folgende Variationen des Codec sind möglich:
- Einsatz einer anderen Transformationscodierung an Stelle von DCT.
- Einsatz einer Vektorquantisierung an Stelle der DCT. Bei höheren Bitraten auch DPCM.
- Bewegungsschätzer: Es kann an Stelle eines Gradientenschätzverfahrens auch ein Blockmatching Suchverfahren angewendet weden. (z.B. Hierarchische Blockmatching Displacementschätzverfahren nach EP-A-0 236 519.
- Im Decoder kann an Stelle der Extrapolation ausgelassener Bilder eine Interpolation erfolgen.
- Die zeitliche Tiefpaßfilterung der rekonstruierten Bilder ist sowohl mit Hilfe einer FIR-Struktur als auch mittels einer IIR (infinite impulse response) möglich.

**Patentansprüche**

1. Verfahren zur senderseitigen Aufbereitung einer Bildsequenz für die Übertragung über einen Kanal mit begrenzter Datenkapazität und deren empfangsseitige Rekonstruktion, dadurch gekennzeichnet, daß die Bildsequenz nach einer Bildaufbauphase folgendermaßen behandelt wird:
   - senderseitig werden Daten der Einzelbilder der Bildsequenz unter Auslassung mindestens zweier Zwischenbilder folgendermaßen ausgewertet:
      a) teilbildbereichsweises Ermitteln und Übertragen der Verschiebungsvektoren für ein bewegungskompensiertes Schätzbild $(k+3_*)$ aus dem Bild $(k)$ vor den letzten ausgelassenen Zwischenbildern,
      b) Bilden der Bildpunkt-zu-Bildpunkt-Differenzen (DFD) zwischen dem Schätzbild $(k+3_*)$ und dem dem Schätzbild entsprechenden neuen Bild $(k+3)$,
      c) teilbildbereichsweises Aufsummieren dieser Bildpunkt-zu-Bildpunkt-Differenzen (DFD),
      d) Codieren und Übertragen jener Teilbildbereiche oder Differenzen zwischen zeitlich aufeinanderfolgenden Teilbildbereichen im Sinne einer Redundanzreduktion, für die das Aufsummieren große Werte liefert,
   - empfangsseitig wird
      e) eine zur senderseitigen Codierung inverse Decodierung vorgenommen,
      f) die durch die Decodierung gewonnenen Daten werden in das mit den Verschiebungsvektoren empfangsseitig erstellte bewegungskompensierte Schätzbild eingesetzt,

g) jedes fehlende Zwischenbild wird mit den übertragenen Verschiebungsvektoren bewegungskompensiert extrapoliert oder interpoliert.

2. Verfahren nach Anspruch 1, dadurch gekennzeichnet, daß die senderseitige Bildsequenz zur Datenreduktion folgendermaßen vorbehandelt wird:
   a) Reduzieren der Bildauflösung in horizontaler und vertikaler Richtung,
   b) Reduzieren der Chrominanzauflösung in vertikaler Richtung auf mindestens 1/2,
   c) Unterabtastung des Luminanzsignals,
   d) Unterabtastung der Chrominanz-Signale, und daß die empfangsseitige Bildsequenz invers zur senderseitigen Vorbehandlung wieder aufbereitet wird.

3. Verfahren nach Anspruch 1 oder 2, dadurch gekennzeichnet, daß die Austastlücke mit zur Übertragung herangezogen wird.

4. Verfahren nach einem der Ansprüche 1 bis 3, dadurch gekennzeichnet, daß die senderseitigen Bilder progressiv, d.h. ohne Zeilensprung, abgetastet werden.

5. Verfahren nach einem der Ansprüche 1 bis 4, dadurch gekennzeichnet, daß die Codierung der Teilbildbereiche oder Differenzen von Teilbildbereichen durch eine wahrnehmungsadaptive Transformationscodierung, beispielsweise einer diskreten Cosinus-Transformation, erfolgt.

6. Verfahren nach einem der Ansprüche 1 bis 4, dadurch gekennzeichnet, daß die Codierung der Teilbildbereiche oder Differenzen von Teilbildbereichen durch eine Vektorquantisierung erfolgt.

7. Verfahren nach einem der Ansprüche 1 bis 4, dadurch gekennzeichnet, daß die Codierung der Teilbildbereiche oder Differenzen von Teilbildbereichen durch DPCM-Codierung erfolgt.

8. Verfahren nach einem der Ansprüche 1 bis 7, dadurch gekennzeichnet, daß die Verschiebungsvektoren zur Übertragung als Differenzen zum jeweils vorhergehenden Wert statistisch codiert werden, wobei pro Bild nur der erste Verschiebungsvektor als Absolutwert übertragen wird.

9. Verfahren nach einem der Ansprüche 1 bis 8, dadurch gekennzeichnet, daß bei der Übertragung von Differenzen von Teilbildbereichen eine Wichtung in dem Sinne vorgenommen wird, daß kleine Differenzen gedämpft und große Differenzen unverändert übertragen werden.

10. Verfahren nach einem der Ansprüche 1 bis 9, dadurch gekennzeichnet, daß die empfangsseitig rekonstruierte Bildsequenz mittels eines rekursiven zeitlichen Filters von ruckartigen Bewegungsdefekten befreit wird.

**Claims**

1. Method for the preparation of an image sequence at the transmitter end for the transmission by way of a channel with limited data capacity and its reconstruction at the reception end, characterised thereby, that the image sequence is treated in the following manner after an image synthesis phase:
   - at the transmitter end, data of the individual images of the image sequence are evaluated as following with the omission of at least two intermediate images:
   a) for each partial image region, ascertaining and transmitting of the displacement vectors for a movement-compensated estimated image $(k+3^*)$ from the image $(k)$ before the last omitted intermediate images,
   b) forming the dot-to-dot differences (DFD) between the estimated image $(k+3^*)$ and the new image $(k+3)$ corresponding to the estimated image,
   c) for each partial image region, adding up these dot-to-dot differences (DFD),
   d) coding and transmitting these partial image regions or differences between partial image regions, which follow one on the other in time, in the sense of a redundancy reduction, for which the adding-up delivers large values and
   - at the reception end,
   e) a decoding inverse to the decoding at the transmitter end is undertaken,

EP 0 346 637 B1

f) the data obtained by the decoding are inserted into the movement-compensated estimated image set up at the reception end with the displacement vectors and

g) each absent intermediate image is extrapolated or interpolated, compensated for movement, with the transmitted displacement vectors.

2. Method according to claim 1, characterised thereby, that the image sequence at the transmitter end is preliminarily treated for data reduction in the following manner:

   a) reducing the image resolution in horizontal and vertical direction,

   b) reducing the chrominance resolution in vertical direction to at least half,

   c) subscanning of the luminance signal and

   subscanning of the chrominance signals,

   and that the image sequence at the reception end is again prepared inversely to the preliminary treatment at the transmitter end.

3. Method according to claim 1 or 2, characterised thereby, that the gating gap is also drawn upon for transmission.

4. Method according to one of the claims 1 to 3, characterised thereby, that the images at the transmitter end are scanned progessively, i.e. without interlacing.

5. Method according to one of the claims 1 to 4, characterised thereby, that the coding of the partial image regions or differences of partial image regions takes place by a perception-adaptive transformation coding, for example a discrete cosine transformation.

6. Method according to one of the claims 1 to 4, characterised thereby, that the coding of the partial image regions or differences of partial image regions takes place by a vector quantisation.

7. Method according to one of the claims 1 to 4, characterised thereby, that the coding of the partial image regions or differences of partial image regions takes place by differential pulse code modulation.

8. Method according to one of the claims 1 to 7, characterised thereby, that the displacement vectors are coded statistically for transmission as differences from the respectively preceding value, wherein only the first displacement vector for each image is transmitted as absolute value.

9. Method according to one of the claims 1 to 8, characterised thereby, that for the transmission of differences of partial image regions, a weighting is undertaken in the sense that small differences are transmitted attenuated and large differences are transmitted unchanged.

10. Method according to one of the claims 1 to 9, characterised thereby, that the image sequence reconstructed at the reception end is freed of jerky movement effects by means of a recursive temporal filter.

**Revendications**

1. Procédé pour la préparation côté émetteur d'une séquence d'images destinée à être transmise par un canal ayant une capacité limitée de données et pour sa reconstitution côté réception, caractérisé en ce que, à la suite d'une phase de formation d'image, la séquence d'images est traitée comme suit:

   - côté émetteur, des données des images individuelles de la séquence d'images sont exploitées, avec omission d'au moins deux images intermédiaires, de la manière suivante:

   a) détermination et transmission, zone d'image partielle par zone d'image partielle, des vecteurs de de translation pour une image estimée, compensée en mouvement $(k + 3^*)$ à partir de l'image $(k)$ avant les dernières images intermédiaires omises,

   b) formation des différences point d'image à point d'image (DFD) entre l'image estimée $(k + 3^*)$ et la nouvelle image $(k + 3)$ correspondant à l'image estimée,

   c) sommation, zone d'image partielle par zone d'image partielle, de ces différences point d'image à point d'image (DFD),

   d) codage et transmission des zones d'image partielle ou des différences entre des zones d'image partielle qui se suivent dans le temps, dans le sens d'une réduction de la redondance, pour lesquelles la sommation fournit de grandes valeurs,
- tandis que, côté réception,
e) un décodage inverse du codage côté émetteur est opéré,
f) les données obtenues par le décodage sont introduites dans l'image estimée, compensée en mouvement, qui est établie côté réception à l'aide des vecteurs de translation et
g) chaque image intermédiaire manquante est extrapolée ou interpolée, avec compensation en mouvement, à l'aide des vecteurs de translation transmis.

2. Procédé selon la revendication 1, caractérisé en ce que la séquence d'images côté émetteur est prétraitée, en vue de la réduction des données, de la manière suivante:
a) réduction de la définition de l'image dans le sens vertical et dans le sens horizontal,
b) réduction de la définition de chrominance dans le sens vertical à au moins 1/2,
c) sous-échantillonnage du signal de luminance,
d) sous-échantillonnage des signaux de chrominance,
et que la séquence d'images côté réception est préparée de nouveau de façon inverse au prétraitement côté émetteur.

3. Procédé selon la revendication 1 ou 2, caractérisé en ce que l'intervalle de suppression est utilisé également pour la transmission.

4. Procédé selon une des revendications 1 à 3, caractérisé en ce que les images côté émetteur sont échantillonnées progressivement, c'est-à-dire sans entrelacement de lignes.

5. Procédé selon une des revendications 1 à 4, caractérisé en ce que le codage des zones d'image partielle ou des différences des zones d'image partielle s'effectue par un codage de transformation adaptative à la perceptivité, par exemple par une transformée discrète en cosinus.

6. Procédé selon une des revendications 1 à 4, caractérisé en ce que le codage des zones d'image partielle ou des différences de zones d'image partielle s'effectue par une quantification vectorielle.

7. Procédé selon une des revendications 1 à 4, caractérisé en ce que le codage des zones d'image partielle ou des différences de zones d'image partielle s'effectue par un codage MICD.

8. Procédé selon une des revendications 1 à 7, caractérisé en ce que les vecteurs de translation sont codés statistiquement pour la transmission comme des différences avec la valeur correspondante qui précède à chaque fois, avec transmission comme valeur absolue, pour chaque image, du seul premier vecteur de translation.

9. Procédé selon une des revendications 1 à 8, caractérisé en ce que, dans la transmission de différences de zones d'image partielle, une pondération est opérée en ce sens que de petites différences sont transmises avec atténuation et que de grandes différences sont transmises inchangées.

10. Procédé selon une des revendications 1 à 9, caractérisé en ce que la séquence d'images reconstituée, côté réception, est débarrassée de défauts de mouvement semblables à des à-coups au moyen d'un filtre récursif temporel.

FIG.1

BILD K

ERGÄNZT

ZEIT

BILD K+ 3

$\overline{D}$

$D = (dx, dy)$
TRANSLATION

ERGÄNZT

FIG. 2

BILD K

BILD K+1

ZEIT

ERGÄNZT

$+1/3 \ \overrightarrow{D_K}$

BILD K+2

AUSGELASSEN

$-1/3 \ \overrightarrow{D_{K+3}}$

BILD K+3

AUSGELASSEN

$\overrightarrow{D_{K+3}}$

$D = (dx, dy)$
TRANSLATION

ERGÄNZT

FIG. 3

Y-PCM

K+3

TP1

PLANAR 2↓

(K+3)'

PLANAR 2↓ (K+3)'' TP2

MUX

DCT

DCT⁻¹

PLANAR 2↑ TP3

MUX

FST1

K

PLANAR 2↑ TP4

CHROM. DCT

FEC

ISDN-INTF.

S₀

FD

(K+3)''

K+3

K

FST2 K'

ME D

MCFE

K+3 *

NL

DFD

D

CHROM. DFD

CONTROL

FIG. 4

FIG. 5

EP 0 346 637 B1

FIG. 6

FIG. 7

| DFD* | BLOCK NO. | | CHROM. | DC 'COSTS' | | [BIT] |
| | LUM. | CHROM. | FLAG | LUM. | CHROM. | TOTAL |
|---|---|---|---|---|---|---|
| 1116 | 552 | 30 | 1 | 20 | 18 | 38 |
| 1020 | 432 | 24 | 1 | 39 | 32 | 71 |
| 987 | 416 | 24 | 0 | 13 | 32 | 29 |
| 878 | 336 | 20 | 1 | 15 | 28 | 43 |
| . | . | . | . | . | . | . |
| . | . | . | . | . | . | . |

$$DFD^* = DFD_{LUM} + DFD_{CHROM}$$

# FIG. 8

| SYNC. | VECTOR MASK | CONTR. INFORM. | VECTOR INFORM. | LUM. DCT | CHROM. DCT | UPDATE MASK |
|---|---|---|---|---|---|---|

# FIG. 10

FIG. 9

EP 0 346 637 B1

FIG. 11

FIG. 12

RELEVANTE KOEFFIZIENTENGRUPPEN

| | | | | | | | |
|---|---|---|---|---|---|---|---|
| 1 | 2 | 3 | 4 | 5 | 6 | 6 | |
| 7 | 8 | 9 | 10 | 11 | | | |
| 12 | 13 | 14 | 15 | 11 | | | |
| 16 | 17 | 11 | 11 | | | | |
| 17 | 15 | 11 | | | | | |
| 18 | | | | | | | |
| | | | | | | | |
| | | | | | | | |

# FIG. 13

KLASSENAPPROXIMATION

→ KOEFFIZIENTENGRUPPE

| KLASSE | 1 | 2 | 3 | 4 | 5 | 6 | 7 | 8 | 9 | 10 | 11 | 12 | 13 | 14 | 15 | 16 | 17 | 18 |
|---|---|---|---|---|---|---|---|---|---|---|---|---|---|---|---|---|---|---|
| 1 | 1 | | | | | | | | | | | | | | | | | |
| 2 | 1 | 1 | | | | | | | | | | | | | | | | |
| 3 | 1 | | | | | | 1 | | | | | | | | | | | |
| 4 | 1 | 1 | | | | | 1 | | | | | | | | | | | |
| 5 | 1 | 1 | 1 | | | | 1 | | | | | | | | | | | |
| 6 | 1 | 1 | | | | | 1 | 1 | | | | 1 | | | | | | |
| 7 | 1 | 1 | 1 | 1 | | | 1 | 1 | | | | 1 | | | | | | |
| ⋮ | | | | | | | | | | | | | | | | | | |
| 16 | 1 | 1 | 1 | 1 | 1 | 1 | 1 | 1 | 1 | 1 | 1 | 1 | 1 | 1 | 1 | 1 | | |